# EUROPÄISCHE PATENTSCHRIFT

(11) **EP 1 566 060 B1**
(45) Veröffentlichungstag und Bekanntmachung des Hinweises auf die Patenterteilung: **27.05.2009**
(21) Anmeldenummer: 03753323.9
(22) Anmeldetag: 23.09.2003
(51) Int. Cl.: H04N 7/18, B60R 1/00

(54) **VORRICHTUNG UND VERFAHREN ZUR VERBESSERUNG DER SICHT IN EINEM KRAFTFAHRZEUG**
DEVICE AND METHOD FOR IMPROVING VISIBILITY IN A MOTOR VEHICLE
DISPOSITIF ET PROCEDE POUR AMELIORER LA VISIBILITE DANS UN VEHICULE AUTOMOBILE

(30) Priorität: 16.11.2002 DE 10253510
(43) Veröffentlichungstag der Anmeldung: 24.08.2005
(73) Patentinhaber: ROBERT BOSCH GMBH, 70442 Stuttgart (DE)
(72) Erfinder: KNOLL, Peter, 76275 Ettlingen (DE)
(86) Internationale Anmeldenummer: PCT/DE2003/003152
(87) Internationale Veröffentlichungsnummer: WO 2004/047449

(56) Entgegenhaltungen:
- WO-A-02/36389
- DE-A- 4 221 015
- DE-A- 10 016 184
- DE-A- 19 926 559
- DE-A- 19 940 723
- FR-A- 577 501
- US-B1- 6 411 328
- PATENT ABSTRACTS OF JAPAN vol. 012, no. 156 (P-701), 13. Mai 1988 (1988-05-13) & JP 62 273477 A (NIPPON DENSO CO LTD), 27. November 1987 (1987-11-27)

## Beschreibung

### Stand der Technik

Die Erfindung betrifft eine Vorrichtung und ein Verfahren zur Verbesserung der Sicht in einem Kraftfahrzeug mit wenigstens einem infrarotempfindlichen Bildsensorsystem.

Die Sichtverhältnisse, die dem Fahrer eines Kraftfahrzeuges vorliegen, beeinflussen die Unfallhäuiigkeit im Straßenverkehr und damit die Verkehrssicherheit. Neben den Beleuchtungsverhältnissen bestimmen die Wetterverhältnisse die Sicht des Fahrers. Es ist beispielsweise bekannt, dass sich ein prozentual höherer Anteil der tödlichen Unfälle im Straßenverkehr bei Nacht ereignet. Anderseits verschlechtern Nebel, Regen und Schnee die Sichtverhältnisse. Besonders schwierige Verhältnisse liegen vor, wenn schlechte Beleuchtungsverhältnisse und schlechte Wetterverhältnisse vorhanden sind, beispielsweise wenn bei Nacht Regen die Sicht vermindert.

Aus der DE 40 32 927 C2 ist eine Vorrichtung zur Verbesserung der Sichtverhältnisse in einem Kraftfahrzeug mit einer infrarotempfindlichen Kamera und mit einer als Head-up-Display ausgebildeten Anzeigevorrichtung bekannt. Es wird vorgeschlagen, dass als Fahrerinformationen das Bild der Kamera als virtuelles Bild der äußeren Landschaft visuell überlagert wird. Zur Ausleuchtung des von der infrarotempfindlichen Kamera erfassten Sichtbereiches wird eine Strahlungsquelle mit einem Infrarotstrahlungsanteil verwendet. Die Bewertung der Anzeige wird dem Fahrer überlassen.

Aus der deutschen Offenlegungsschrift DE 199 40 723 A1 ist ein Verfahren zur Anzeige eines perspektivischen Bildes bekannt. Die deutsche Offenlegungsschrift DE 100 16 184 A1 offenbart eine Vorrichtung und ein Verfahren zur Anzeige der Umgebung eines Fahrzeuges. Aus der deutschen Offenlegungsschrift DE 42 21 015 A1 ist ein System und ein Verfahren zur automatischen Fahrzeugsteuerung bekannt.

### Vorteile der Erfindung

Die Vorrichtung und das Verfahren der vorliegenden Erfindung gemäß den Ansprüchen 1 und 7 führen zu einer Verbesserung der Sicht in einem Kraftfahrzeug bei gleichzeitiger Entlastung des Fahrers. Dieser Vorteil wird durch die Steuerung des wenigstens einen Signalisierungsmittels zur Erzeugung der Fahrerinformationen in Abhängigkeit des Fahrbahnverlaufs erreicht. Fahrer von heutigen modernen Kraftfahrzeugen müssen eine große Informationsmenge aus dem Straßenverkehr und dem Kraftfahrzeug selbst verarbeiten. Die nachfolgend beschriebene Vorrichtung und das Verfahren ermöglichen in vorteilhafter Weise die Verminderung der durch den Fahrer zu verarbeitenden Informationsmenge. Dies führt in besonders vorteilhafter Weise zu einer hohen Akzeptanz durch den Fahrer. Zum anderen kann die Vorrichtung und das Verfahren zur Reduzierung der Unfallzahlen im Straßenverkehr bei schlechten Beleuchtungsbedingungen und/oder Wetterbedingungen beitragen, insbesondere zur Reduzierung der Zahl der Unfälle bei Nacht.

Durch den Einsatz von räumlich hochauflösenden Bildsensorsystemen, beispielsweise mit einer Auflösung von 1280x1024 Pixeln, ist die Zahl der erfassbaren Objekte in der Umgebung des Kraftfahrzeuges hoch. Die Zuordnung der erfassten Objekte im Detektionsfeld des Bildsensorsystems zum Fahrbahnverlauf liefert ein einfaches Entscheidungskriterium, um die Zahl der darzustellenden Objekte zu reduzieren. Durch die Steuerung des wenigstens einen Signalisierungsmittels zur Erzeugung der Fahrerinformationen in Abhängigkeit der Lage wenigstens eines Objekts zum Fahrbahnverlauf wird in vorteilhafter Weise eine Reizüberflutung des Fahrers verhindert. Besonders vorteilhaft ist, dass die Ablenkung des Fahrers durch die nachfolgend beschriebene Vorrichtung und das Verfahren auf ein Minimum reduziert wird. Damit wird in vorteilhafter Weise die Verkehrssicherheit insgesamt erhöht. Daneben ermöglicht die Zuordnung der erfassten Objekte zum Fahrbahnverlauf als Entscheidungskriterium den Einsatz von einfachen und kostengünstigen Verarbeitungseinheiten.

Die Steuerung der Signalisierungsmittel zur Erzeugung der Fahrerinformationen in Abhängigkeit von der Fahrsituation und/oder von den Sichtverhältnissen führt zu weiteren Vorteilen der nachfolgend beschriebenen Vorrichtung und des Verfahrens. Hierdurch wird in vorteilhafter Weise eine weitere Reduzierung der Informationsmenge, die ein Fahrer eines Kraftfahrzeuges verarbeiten muss, erreicht, indem nur für den Fahrer wichtige Informationen angezeigt werden. Beispielsweise ermöglicht die nachfolgend beschriebene Vorrichtung und das Verfahren eine situationsbezogene Warnung des Fahrers vor Hindernissen im Fahrbahnverlauf, also auf der eigenen Fahrspur und in benachbarten Bereichen, die der Fahrer bei abgeblendeten Scheinwerfern bei Nachfahrten nicht sieht. Die Steuerung der Signalisierungsmittel zur Erzeugung der Fahrerinformationen in Abhängigkeit von den Sichtverhältnissen ermöglicht es, den Fahrer so rechtzeitig zu warnen, dass er noch auf ein Hindernis reagieren kann. Damit werden in vorteilhafter Weise Unfälle verhindert. Gleichzeitig ist es jedoch möglich, auf eine Warnung vor einem Hindernis zu verzichten, wenn das für den Fahrer nicht sichtbare Hindernis keine Gefahr darstellt.

Fahrerinformationen, die zur Repräsentation wenigstens eines Objektes und/oder des Fahrbahnverlaufes geeignet sind, ermöglichen es dem Fahrer in vorteilhafter Weise den Fahrbahnverlauf zu erfassen und Gefahren, die von Objekten ausgehen, schnell und sicher selbst zu erkennen. Beispielsweise ist es bei Nacht vielfach schwierig, dass der Fahrer den Fahrbahnverlauf selbst sehen kann. Durch die gleichzeitige Darstellung des Fahrbahnverlaufs und von Objekten kann ein Fahrer beurteilen, ob Objekte eine Gefahr darstellen.

Durch die Verwendung wenigstens eines Lichtimpulses im Blickfeld des Fahrers zu seiner Warnung und/oder wenigstens eines Warnsymbols und/oder wenigstens einer Bildmarkierung und/oder wenigstens eines Ausschnitts eines Bildes und/oder wenigstens einen akustischen Signals und/oder wenigstens eines optischen Signals als Fahrerinformationen, wird die auf den Fahrer einwirkende Informationsmenge reduziert. Durch diese gezielte Warnung des Fahrers über einen oder mehrere mögliche Informationswege, wird in vorteilhafter Weise die Ablenkungsgefahr des Fahrers verringert.

Durch Ausleuchtung wenigstens eines Teils der von dem infrarotempfmdlichen Bildsensorsystem erfassten Umgebung des Kraftfahrzeuges durch wenigstens eine Infrarotstrahlungsquelle, wird die Empfindlichkeit und der räumliche Erfassungsbereich des Bildsensorsystems in vorteilhafter Weise erhöht. Die Infrarotstrahlungsquelle ermöglicht die Erfassung von Objekten, die keine Infrarotstrahlung abstrahlen, durch das wenigstens eine Bildsensorsystem.

Besonders vorteilhaft ist ein Computerprogramm mit Programmcode-Mitteln, um alle Schritte des nachfolgend beschriebenen Verfahrens durchzuführen, wenn das Programm auf einem Computer ausgeführt wird. Die Verwendung eines Computerprogramms ermöglicht die schnelle und kostengünstige Anpassung des Verfahrens an unterschiedliche Bildsensorsysteme und/oder Signalisierungsmittel.

Weitere Vorteile ergeben sich aus der nachfolgenden Beschreibung von Ausführungsbeispielen mit Bezug auf die Figuren und aus den abhängigen Patentansprüchen.

### Zeichnung

Die Erfindung wird nachstehend anhand der in der Zeichnung dargestellten Ausführungsformen näher erläutert.

Es zeigen:
- Figur 1 eine Übersichtszeichnung eines ersten Ausführungsbeispiels zur Verbesserung der Sicht in einem Kraftfahrzeug,
- Figur 2 eine Übersichtszeichnung eines zweiten Ausführungsbeispiels zur Verbesserung der Sicht in einem Kraftfahrzeug,
- Figur 3 ein Blockdiagramm der Vorrichtung zur Verbesserung der Sicht in einem Kraftfahrzeug,
- Figur 4 ein Ablaufdiagramm.

### Beschreibung von Ausführungsbeispielen

Nachfolgend werden eine Vorrichtung und ein Verfahren zur Verbesserung der Sicht in einem Kraftfahrzeug mit einem infrarotempfindlichen Bildsensorsystem beschrieben. Über ein Signalisierungsmittel, beispielsweise einen Monitor oder ein Head-up-Display, werden dem Fahrer des Kraftfahrzeuges Fahrerinformationen über den Fahrbahnverlauf und/oder Objekte in der Umgebung des Kraftfahrzeuges angezeigt. Die Anzeige der Fahrerinformationen erfolgt dabei in Abhängigkeit des Fahrbahnverlaufes.

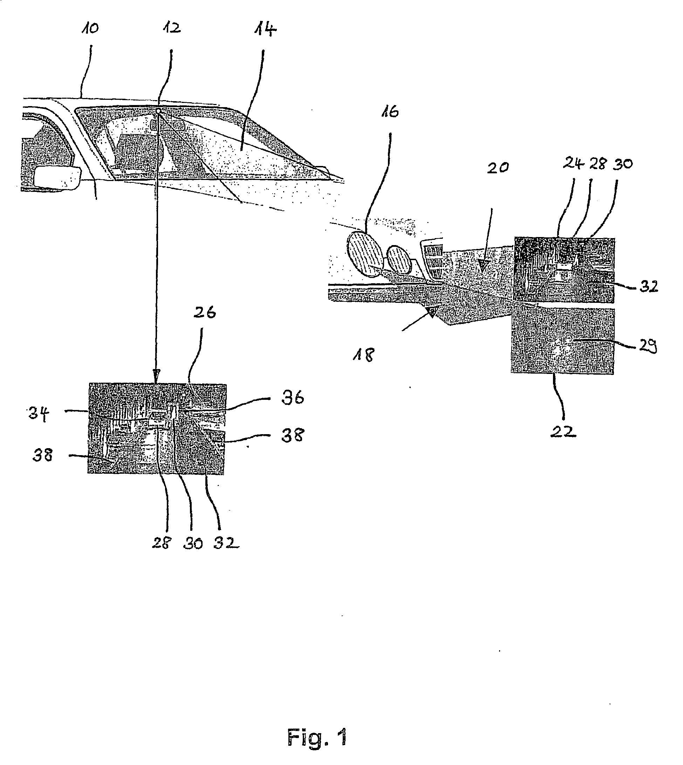

Figur 1 zeigt eine Übersichtszeichnung eines ersten Ausführungsbeispiels zur Verbesserung der Sicht in einem Kraftfahrzeug 10, bestehend aus einem infrarotempfindlichen Bildsensorsystem 12, einem Scheinwerfer 16 und einem Bild auf einem Bildschirm 26. Das Bildsensorsystem 12 ist im Innenraum des Kraftfahrzeuges 10 hinter der Windschutzscheibe im Bereich des Innenrückspiegels angebracht. Das Bildsensorsystem 12 ist so ausgerichtet, dass sich der Erfassungsbereich 14 des Bildsensorsystems 12 auf die Umgebung des Kraftfahrzeuges 10 in Fahrtrichtung erstreckt. Bei dem Bildsensorsystem 12 handelt es sich um eine infrarotsensitive Videokamera mit einem CMOS-Bildsensor und/oder einem CCD-Bildsensor. Der Bildsensor des Bildsensorsystems 12 erfasst wenigstens nahe Infrarotstrahlung im Wellenlängenbereich zwischen 780 nm und 1000 nm. Das Kraftfahrzeug 10 wird von einem Fahrer gelenkt, wobei sich das Kraftfahrzeug 10 auf einer Straße befindet und in Fahrrichtung fährt. In der in Figur 1 gezeigten Situation sind die Wetterverhältnisse und die Beleuchtungsverhältnisse schlecht, da Dunkelheit die Sicht des Fahrers beeinträchtigt. Zwei Scheinwerfer 16, die rechts und links im vorderen Bereich des Kraftfahrzeuges 10 in der Nähe der Stoßstange angeordnet sind, leuchten die Umgebung des Kraftfahrzeuges 10 in Fahrtrichtung aus. In Figur 1 ist in einer vereinfachten Darstellung nur ein Scheinwerfer 16 eingezeichnet. Neben dem Abblendlicht 18 im sichtbaren Spektralbereich erzeugen die Scheinwerfer 16 Strahlung mit Fernlichtcharakteristik 20 im infraroten Spektralbereich. Die Reichweite des Abblendlichts 18 beträgt etwa 40 m. Die Scheinwerfer 16 haben eine Fernlichtfunktion im sichtbaren Spektralbereich, mit denen der Fahrer, je nach Witterungsbedingungen, bis zu 200 m sieht. Die Fernlichtfunktion im sichtbaren Spektralbereich ist in diesem Ausführungsbeispiel nicht aktiviert. In dem abgestrahlten Spektrum der Halogenlampen der Scheinwerfer 16 ist ein hoher Infrarotanteil enthalten, der durch diese modifizierten Scheinwerfer 16, unsichtbar für den Menschen, mit Fernlichtcharakteristik abgestrahlt wird. Die Wahrnehmung 22 des Fahrers ist durch die Dunkelheit stark eingeschränkt. Dagegen wird eine bessere Wahrnehmung 24 des infrarotempfindlichen Bildsensorsystems 12 durch die Modifikation der Frontscheinwerfer 16 mit wenigstens Abstrahlung von naher Infrarotstrahlung mit Wellenlängen zwischen 780 und 1000 nm mit Fernlichtcharakteristik 20 erreicht. In der Wahrnehmung 24 des infrarotempfindlichen Bildsensorsystems 12 ist ein entgegenkommendes Kraftfahrzeug 28, ein Fußgänger 30 und die Fahrbahn 32 zu sehen, während in der Wahrnehmung 22 des Fahrers lediglich die Scheinwerfer 29 des entgegenkommenden Kraftfahrzeuges 28 zu erkennen sind. Der hinter dem entgegenkommenden Kraftfahrzeug 28 querende Fußgänger 30 ist in der Wahrnehmung 24 des Bildsensorsystems 12 deutlich zu erkennen, während er in der Wahrnehmung 22 des Fahrers nicht sichtbar ist. Die Wahrnehmung 24 des infrarotempfindlichen Bildsensorsystems 12 wird verarbeitet und als Bild auf einem Bildschirm 26 dem Fahrer des Kraftfahrzeuges 10 angezeigt. Als Bildschirm wird ein Monitor verwendet, der im Armaturenbrett des Kraftfahrzeuges 10 angeordnet ist. Dieser Bildschirm kann sich im Bereich der Mittelkonsole und/oder im Kombiinstrument des Kraftfahrzeuges 10 unmittelbar hinter dem Lenkrad befinden. Neben der Anzeige der Geschwindigkeit und/oder der Drehzahl durch das Kombiinstrument, hat der Fahrer die Möglichkeit ohne Blickrichtungsänderung auch das Bild der Umgebung des Kraftfahrzeuges 10 zu sehen. Mit Hilfe von geeigneten Bildverarbeitungsalgorithmen werden Objekte 28, 30 im Detektionsfeld, also im Bereich des Fahrbahnverlaufs, erkannt, und die Objekte 28, 30 werden dem Fahrbahnverlauf zugeordnet. Die Fahrbahn 32 umfasst dabei grundsätzlich die eigene Fahrspur und die Fahrspur des Gegenverkehrs. Bei Autobahnen wird die Fahrbahn 32 durch wenigstens die eigenen Fahrspuren gebildet. Die Fahrbahn 32 wird durch die Fahrbahnmarkierungen wie Leitpfosten und/oder Fahrspurlinien festgelegt. Der Fahrbahnverlauf umfasst dabei die Fahrbahn 32 selbst und angrenzende Bereiche der Fahrbahn 32, wie beispielsweise Randstreifen und/oder Gehwege und/oder Radwege und/oder Einmündungen von Straßen. In diesem Ausführungsbeispiel werden als Objekte 28, 30 ein entgegenkommendes Kraftfahrzeug 28 und ein Fußgänger 30 erkannt. Im Bild auf dem Bildschirm 26 wird das durch das infrarotempfindliche Bildsensorsystem 12 aufgenommene Bild der Umgebung des Kraftfahrzeuges 10 mit einer Markierung 34 des entgegenkommenden Kraftfahrzeuges 28, einer Markierung 36 des Fußgängers 30 und einer Markierung des Fahrbahnverlaufs 38 der Fahrbahn 32 angezeigt. Dieses Bild auf dem Bildschirm 26 mit den eingeblendeten Markierungen 34, 36, 38 wird dem Fahrer des Kraftfahrzeuges 10 dargeboten. Durch die Markierungen 34, 36, 38 erkennt der Fahrer die Objekte 28, 30 wesentlich schneller als bei ausschließlicher Anzeige der unverarbeiteten Bildinformationen des infrarotempfindlichen Bildsensorsystems 12 und kann sie leicht der eigenen Fahrspur zuordnen. Die Bildverarbeitungsalgorithmen sind in diesem Ausführungsbeispiel so ausgelegt, dass die Markierung des Fahrbahnverlaufes 38 immer erfolgt, während die Markierungen 34, 36 von Objekten 28, 30 nur durchgeführt wird, wenn sich die Objekte 28, 30 im Bereich des Fahrbahnverlaufes des Kraftfahrzeuges 10 befinden. Die optische Warnung durch die Markierungen 34, 36, 38 wird in einer Ausführung durch eine akustische Warnung zusätzlich unterstützt, falls ein gefährlicher Zustand erkannt wird. Über einen Lautsprecher kann der Fahrer des Kraftfahrzeuges 10 zusätzlich akustisch gewarnt werden. In diesem Ausführungsbeispiel wird ein gefährlicher Zustand erkannt, weil der Fußgänger 30 hinter dem entgegenkommenden Kraftfahrzeug 28 die Fahrbahn 32 kreuzt und die Gefahr eines Zusammenstoßes des eigenen Kraftfahrzeuges 10 mit dem Fußgänger 30 vorhanden ist.

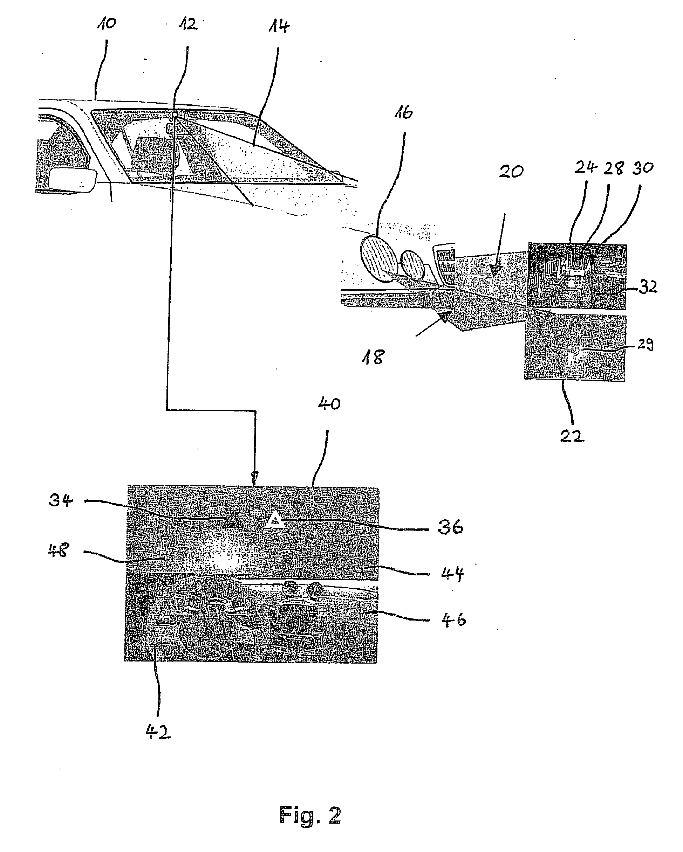

Figur 2 zeigt eine Übersichtszeichnung eines zweiten Ausführungsbeispiels zur Verbesserung der Sicht in einem Kraftfahrzeug 10, bestehend aus einem infrarotempfindlichen Bildsensorsystem 12, einem Scheinwerfer 16 und der tatsächlichen Sicht des Fahrers 40 des Kraftfahrzeuges 10. Wie im ersten Ausführungsbeispiel nach Figur 1 ist das Bildsensorsystem 12 im Innenraum des Kraftfahrzeuges 10 hinter der Windschutzscheibe im Bereich des Innenrückspiegels angebracht. Das Bildsensorsystem 12 ist so ausgerichtet, dass sich der Erfassungsbereich 14 des Bildsensorsystems 12 auf die Umgebung des Kraftfahrzeuges 10 in Fahrtrichtung erstreckt. Bei dem Bildsensorsystem 12 handelt es sich um eine infrarotsensitive Videokamera mit einem CMOS-Bildsensor und/oder einem CCD-Bildsensor. Der Bildsensor des Bildsensorsystems 12 erfasst wenigstens nahe Infrarotstrahlung im Wellenlängenbereich zwischen 780 nm und 1000 nm. Das Kraftfahrzeug 10 wird von einem Fahrer gelenkt, wobei sich das Kraftfahrzeug 10 auf einer Straße befindet und in Fahrrichtung fährt. Es liegt die gleiche Fahrsituation vor, wie im ersten Ausführungsbeispiel nach Figur 1. Die Wetterverhältnisse und die Beleuchtungsverhältnisse sind schlecht, da Dunkelheit die Sicht des Fahrers beeinträchtigt. Zwei Scheinwerfer 16, die rechts und links im vorderen Bereich des Kraftfahrzeuges 10 in der Nähe der Stoßstange angeordnet sind, leuchten die Umgebung des Kraftfahrzeuges 10 in Fahrtrichtung aus. In Figur 2 ist in einer vereinfachten Darstellung nur ein Scheinwerfer 16 eingezeichnet. Neben dem Abblendlicht 18 im sichtbaren Spektralbereich erzeugen die Scheinwerfer 16 Strahlung mit Fernlichtcharakteristik 20 im infraroten Spektralbereich. Die Reichweite des Abblendlichts 18 beträgt etwa 40 m. Die Scheinwerfer 16 haben eine Fernlichtfunktion im sichtbaren Spektralbereich, mit denen der Fahrer, je nach Witterungsbedingungen, bis zu 200 m sieht. Die Fernlichtfunktion im sichtbaren Spektralbereich ist in diesem Ausführungsbeispiel nicht aktiviert. In dem abgestrahlten Spektrum der Halogenlampen der Scheinwerfer 16 ist ein hoher Infrarotanteil enthalten, der durch diese modifizierten Scheinwerfer 16, unsichtbar für den Menschen, mit Fernlichtcharakteristik abgestrahlt wird. Die Wahrnehmung 22 des Fahrers ist durch die Dunkelheit stark eingeschränkt. Dagegen wird eine bessere Wahrnehmung 24 des infrarotempfindlichen Bildsensorsystems 12 durch die Modifikation der Frontscheinwerfer 16 mit wenigstens Abstrahlung von naher Infrarotstrahlung mit Wellenlängen zwischen 780 und 1000 nm mit Fernlichtcharakteristik 20 erreicht. In der Wahrnehmung 24 des infrarotempfindlichen Bildsensorsystems 12 ist ein entgegenkommendes Kraftfahrzeug 28, ein Fußgänger 30 und die Fahrbahn 32 zu sehen, während in der Wahrnehmung 22 des Fahrers lediglich die Scheinwerfer 29 des entgegenkommenden Kraftfahrzeuges 28 zu erkennen sind. Der hinter dem entgegenkommenden Kraftfahrzeug 28 querende Fußgänger 30 ist in der Wahrnehmung 24 des Bildsensorsystems 12 deutlich zu erkennen, während er in der Wahrnehmung 22 des Fahrers nicht sichtbar ist. Figur 2 zeigt weiterhin die tatsächliche Sicht des Fahrers 40, umfassend das Lenkrad 42, die Windschutzscheibe 44 und das Armaturenbrett 46. In diesem zweiten Ausführungsbeispiel wird die Wahrnehmung 24 des infrarotempfindlichen Bildsensorsystems 12 einer Verarbeitungseinheit zugeführt, die nur dann eine Warnung erzeugt, wenn ein gefährlicher Zustand erkannt wird. Mit Hilfe von geeigneten Bildverarbeitungsalgorithmen werden Objekte 28, 30 im Detektionsfeld, also im Bereich des Fahrbahnverlaufs, erkannt, und die Objekte 28, 30 werden dem Fahrbahnverlauf zugeordnet. Die Fahrbahn 32 umfasst dabei wie im Ausführungsbeispiel nach Figur 1 grundsätzlich die eigene Fahrspur und die Fahrspur des Gegenverkehrs. Bei Autobahnen wird die Fahrbahn 32 durch wenigstens die eigenen Fahrspuren gebildet. Die Fahrbahn 32 wird durch die Fahrbahnmarkierungen wie Leitpfosten und/oder Fahrspurlinien festgelegt. Der Fahrbahnverlauf umfasst dabei die Fahrbahn 32 selbst und angrenzende Bereiche der Fahrbahn 32, wie beispielsweise Randstreifen und/oder Gehwege und/oder Radwege und/oder Einmündungen von Straßen. In diesem Ausführungsbeispiel werden als Objekten 28, 30 ein entgegenkommendes Kraftfahrzeug 28 und ein Fußgänger 30 erkannt. Die Verarbeitungseinheit erkennt die Gefährlichkeit der Situation. Über eine einfache Projektionseinrichtung, in diesem Ausführungsbeispiel ein Einfach-Head-up-Display, wird an der Windschutzscheibe 44 ein kleines Warnsymbol 34, 36 als Markierung 34 des entgegenkommenden Kraftfahrzeugs 28 und als Markierung 36 des Fußgängers 30 in Blickrichtung des Fahrers an der so festgelegten Position des entgegenkommenden Kraftfahrzeuges 28 und des Fußgängers 30 erzeugt. Hierdurch wird eine Blickhinwendung des Fahrers in die Richtung ausgelöst, in der die Objekte 28, 30 als Hindernisse später für den Fahrer im Blickfeld tatsächlich erscheinen. Als Warnsymbol 34, 36 wird in diesem Ausführungsbeispiel eine farbliche Markierung in Form eines roten und/oder gelben Dreiecks verwendet. Alternativ ist es möglich durch einen kurzen Lichtimpuls eine Blickhinwendung des Fahrers in Richtung des Hindernisses durch eine Projektionseinrichtung zu erzeugen. Die Sicht des Fahrers 40 der Umgebung des Kraftfahrzeuges 10 nach Figur 2 umfasst demnach das Scheinwerferlicht 48 des entgegenkommenden Kraftfahrzeuges 28, eine Markierung 34 des entgegenkommenden Kraftfahrzeuges 28 und eine Markierung 36 des Fußgängers 30. Durch die Markierungen 34, 36 wird die Aufmerksamkeit des Fahrers des Kraftfahrzeuges 10 auf diese Objekte 28, 30 gerichtet. Die Bildverarbeitungsalgorithmen sind so ausgelegt, dass die Markierung 34, 36 von Objekten 28, 30 nur erfolgt, wenn sich die Objekte 28, 30 im Bereich des Fahrbahnverlaufes des Kraftfahrzeuges 10 befinden und wenn ein gefährlicher Zustand vorliegt. In diesem Ausführungsbeispiel wird ein gefährlicher Zustand erkannt, weil der Fußgänger 30 hinter dem entgegenkommenden Kraftfahrzeug 28 die Fahrbahn 32 kreuzt und die Gefahr eines Zusammenstoßes des eigenen Kraftfahrzeuges 10 mit dem Fußgänger 30 vorhanden ist.

In den beiden Ausführungsbeispielen nach den Figuren 1 und 2 werden Bildsensoren verwendet, die eine hohe Auflösung besitzen. Einsetzbare Halbleiter-Bildaufnehmer-Chips besitzen Auflösungen, die für eine zufriedenstellende Bilddarstellung ausreichen und Objekterkennung in Entfernungen bis etwa 70 Meter ermöglichen. Eine Erkennung von Objekten, die weiter als 70 Meter vom Bildsensor entfernt sind, erfordern höher auflösende Bildsensoren (Imager) mit Standardauflösungen mit 1024x768 Pixel oder 1280x1024 Pixel. Mit Standardauflösungen von 1024x768 Pixel ist eine Objekterkennung bis etwa 110 Meter möglich, während bei einer Standardauflösung von 1280x1024 Pixel eine Objekterkennung bis etwa 140 Meter durchgeführt werden kann. Die Vergütung der Kameraoptik ist in den beiden Ausführungsbeispielen nach den Figuren 1 und 2 an den verwendeten Spektralbereich, angepasst. Die Vergütung ist dabei so ausgelegt, dass die optischen Eigenschaften im sichtbaren Spektralbereich nicht nennenswert verschlechtert sind. Hierdurch ist es möglich, das Bildsensorsystem auch für andere Funktionen bei Tag, also im sichtbaren Spektralbereich, zu verwenden. Weiterhin wird die Apertur der Optik an die herrschende Dunkelempfindlichkeit angepasst.

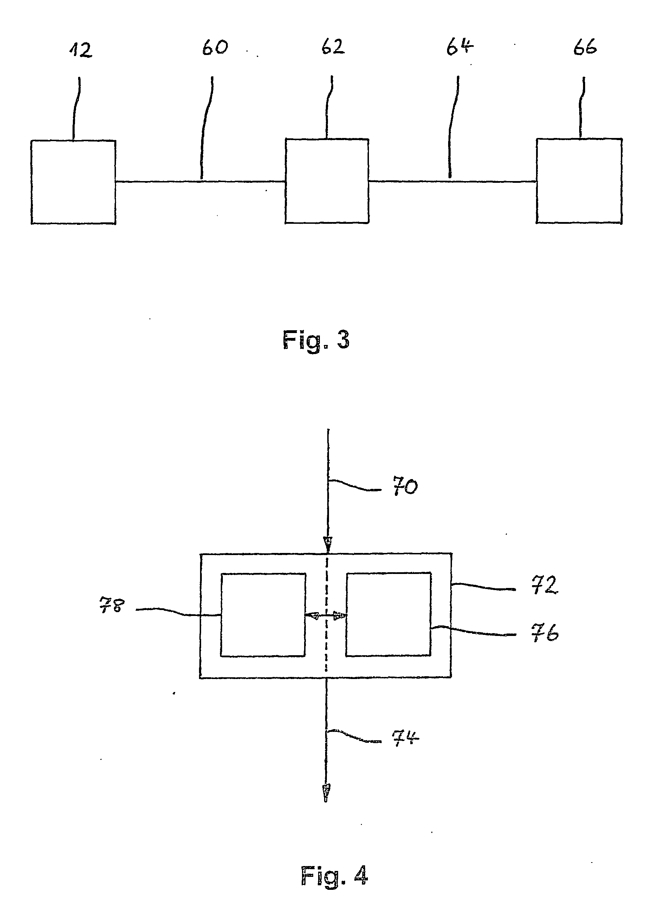

Figur 3 zeigt ein Blockdiagramm der Vorrichtung zur Verbesserung der Sicht in einem Kraftfahrzeug des ersten und zweiten Ausführungsbeispiels entsprechend den Figuren 1 und 2, bestehend aus einem infrarotempfindlichen Bildsensorsystem 12, einer Verarbeitungseinheit 62 und wenigstens einem Signalisierungsmittel 66. Das infrarotempfindliche Bildsensorsystem 12 erfasst optische Signale der Umgebung des Kraftfahrzeuges in Form von Bilddaten. Über die Signalleitung 60 werden die optischen Signale elektrisch und/oder optisch vom infrarotempfindlichen Bildsensorsystem 12 zur Verarbeitungseinheit 62 übertragen. Alternativ oder zusätzlich ist eine Übertragung per Funk möglich. Die Verarbeitungseinheit 62 besteht aus dem in Figur 4 dargestellten Modul 72, das in diesen Ausführungsbeispielen als Programme wenigstens eines Mikroprozessors ausgestaltet ist. In diesem Ausführungsbeispiel liegt die Verarbeitungseinheit 62 physikalisch getrennt von den anderen Komponenten 12, 66 vor. Alternativ ist es möglich, dass die Verarbeitungseinheit 62 zusammen mit dem Bildsensorsystem 12 eine Einheit bildet oder dass die Verarbeitungseinheit 62 im Signalisierungsmittel 66 untergebracht ist. Die Verarbeitungseinheit 62 berechnet aus den optischen Signalen des infrarotempfindlichen Bildsensorsystems 12 Signale zur Fahrerinformation. Die berechneten Signale zur Fahrerinformation werden über eine Signalleitung 64 an wenigstens ein Signalisierungsmittel 66 elektrisch und/oder optisch übertragen. Alternativ oder zusätzlich ist eine Übertragung per Funk möglich. Die Signalisierungsmittel 66 erzeugen aus den Signalen zur Fahrerinformation die eigentlichen Fahrerinformationen beispielsweise in Form einer optischen und/oder einer akustischen Warnung. Als Signalisierungsmittel 66 werden im ersten Ausführungsbeispiel ein Display im Kombiinstrument als ein erstes Signalisierungsmittel 66 und ein Lautsprecher als ein zweites Signalisierungsmittel 66 verwendet, während im zweiten Ausführungsbeispiel eine Projektionseinrichtung eingesetzt wird.

Figur 4 zeigt ein Ablaufdiagramm des Verfahrens zur Verbesserung der Sicht in einem Kraftfahrzeug des ersten und zweiten Ausführungsbeispiels entsprechend den Figuren 1 und 2 und der Vorrichtung nach Figur 3, bestehend aus dem Verarbeitungsmodul 72. Die optischen Signale 70 werden dem Verarbeitungsmodul 72 zugeführt, das als Ausgabesignale die Signale zur Fahrerinformation 74 berechnet. Das Verarbeitungsmodul besteht aus zwei parallelarbeitenden Modulen, dem Modul zur Fahrbahnverlaufserkennung 76 und dem Modul zur Objekterkennung 78. Die Algorithmen zur Spur- und/oder Fahrbahnerkennung des Moduls zur Fahrbahnverlaufserkennung 76 und zur Objekterkennung des Moduls zur Objekterkennung 78 sind zu einem Gesamtalgorithmus zusammengefüge. Diese beiden Module 76, 78 tauschen Informationen und Teilergebnisse während der Verarbeitung aus. Im Modul zur Fahrbahnverlaufserkennung 76 werden aus den optischen Signalen 70 Objekte ermittelt, welche die Fahrbahn oder die Fahrspur festlegen. Diese Objekte sind beispielsweise Leitpfosten und/oder Fahrspurlinien. Durch die Kenntnis der Lage dieser Objekte, wird der Fahrbahnverlauf berechnet. Die Objekte zur Berechnung des Fahrbahnverlaufs werden durch Auswertung von Kontrasten im Bild ermittelt. Beispielsweise werden zur Ermittlung der Fahrspurlinien Kontrastunterschiede zwischen den Spurmarkierungen und der Fahrbahnoberfläche ausgewertet und von der Verarbeitungseinheit in der Bildsequenz verfolgt. Unstetigkeiten und/oder kurze Unterbrechungen der Linien werden beispielsweise durch Kalman-Filteralgorithmen korrigiert. Im Modul zur Objekterkennung 78 werden aus den optischen Signalen ebenfalls Objekte ermittelt. Zur Objektdetektion werden Kontrastunterschiede zwischen Objekt und Umfeld ausgewertet. In einer Variante des beschriebenen Verfahren wird durch die Verwendung einer Stereokamera eine Entfernungsbestimmung der detektierten Objekte durchgeführt. Aus der Größe des Umrisses des Objektes und dessen Entfernung wird eine Größenbestimmung des Objektes ermöglicht. Als Objekte werden insbesondere entgegenkommende Kraftfahrzeuge und/oder Fußgänger und/oder Radfahrer und/oder Motorradfahrer und/oder Lastkraftwagen erkannt. In einer ersten Variante werden lediglich Objekte an sich erkannt, während in einer weiteren Variante eine Objektklassifikation durchgeführt wird. Ein Vergleich zwischen einem erkannten Bildmuster, beispielsweise der Form und/oder der Größe des Objektes, und einem in der Verarbeitungseinheit gespeicherten Bildmuster bildet die Grundlage zur Objektklassifikation. Anschließend wird eine Berechnung der dreidimensionalen Lage der erkannten Objekte zum ermittelten Fahrbahnverlauf durchgeführt. Durch diesen Gesamtalgorithmus ist eine Objektzuordnung zum Fahrbahnverlauf, insbesondere zur Fahrspur und/oder zur Fahrbahn, möglich.

Die beschriebene Vorrichtung und das Verfahren sind nicht auf ein einzelnes Bildsensorsystem beschränkt. Vielmehr werden in einer Variante zusätzliche Bildsensorsysteme verwendet, deren optischen Signale der wenigstens einen Verarbeitungseinheit zugeführt werden. Die Bildsensorsysteme sind dabei mit Farbbildsensoren und/oder schwarz/weiß-Bildsensoren ausgerüstet. In einer weiteren Variante wird wenigstens ein Bildsensorsystem verwendet, das aus wenigstens zwei Bildsensoren besteht, die im wesentlichen dieselbe Szene aufnehmen. In einer anderen Variante wird wenigstens eine Stereokamera verwendet.

In einer weiteren Variante der beschriebenen Vorrichtung und des Verfahrens wird als Fahrerinformation neben wenigstens einem Lichtpuls und/oder wenigstens einem Warnsymbol und/oder wenigstens einer Bildmarkierung und/oder eines akustischen Signals alternativ oder zusätzlich wenigstens ein Ausschnitt eines Bildes und/oder ein haptisches Signal erzeugt. Diese Möglichkeiten werden entweder einzeln oder in beliebigen Kombinationen eingesetzt.

Eine weitere Variante der beschriebenen Vorrichtung enthält neben dem wenigstens einem optischen Signalisierungsmittel und/oder dem wenigstens einen akustischen Signalisierungsmittel alternativ oder zusätzlich wenigstens ein haptisches Signalisierungsmittel. Diese Signalisierungsmittel werden entweder einzeln oder in beliebigen Kombinationen eingesetzt.

In einer weiteren Variante der beschriebenen Vorrichtung und des Verfahrens werden von der Verarbeitungseinheit alternativ oder zusätzlich die Sichtverhältnisse berücksichtigt. Die Sichtverhältnisse sind dabei durch die Sicht des Fahrers definiert. Durch die Einbeziehung der Sichtverhältnisse wird in dieser Variante der Fahrer nur bei solchen Objekten gewarnt, wenn er diese selbst nicht sehen kann. Dies führt zu einer Reduzierung der durch den Fahrer zu verarbeitende Informationsmenge.

Eine weitere Variante sieht vor, anstatt des modifizierten Scheinwerfers mit Halogenlampe nach einem der vorhergehenden Ausführungsbeispiele, als Infrarotstrahlungsquelle einen Infrarot-Laser basierten Scheinwerfer zu verwenden.

In einer weiteren Variante der beschriebenen Vorrichtung und des Verfahrens werden mehr als eine Verarbeitungseinheit verwendet. Hierdurch ist eine Verteilung der Algorithmen auf mehrere Verarbeitungseinheiten möglich. Gleichzeitig liegt eine Redundanz der benötigten Rechenkapazität vor, so dass beim Ausfall einer Verarbeitungseinheit, die Vorrichtung und das Verfahren zur Verbesserung der Sicht weiterhin funktionsfähig bleiben, da die verbleibenden Verarbeitungseinheiten den Ausfall kompensieren.

Die Verwendung von wenigstens einem weiteren Sensor ermöglicht in einer weiteren Variante der beschriebenen Vorrichtung und des Verfahrens eine Verbesserung der Sicht in einem Kraftfahrzeug. Durch die Verwendung von wenigstens einem weiteren Sensor und der Fusion der Sensorsignale mit den erzeugten optischen Signalen wird eine zuverlässigere Erkennung des Fahrbahnverlaufs und/oder der Objekte erreicht. Als wenigstens ein weiterer Sensor wird wenigstens ein Radarsensor und/oder wenigstens ein Ultraschallsensor und/oder wenigstens ein LIDAR-Abstandssensor verwendet. Die Verwendung wenigstens eines weiteren Sensors ermöglicht die redundante Bestimmung der Lage wenigstens eines Objektes und/oder des Fahrbahnverlaufes.

## Patentansprüche

1. Vorrichtung zur Verbesserung der Sicht in einem Kraftfahrzeug (10)
- mit wenigstens einem infrarotempfindlichen Bildsensorsystem (12) zur Erfassung von optischen Signalen von der Umgebung des Kraftfahrzeuges,
- wenigstens einem Signalisierungsmittel (26) zur Erzeugung von Fahrerinformationen,
- und wenigstens einer Verarbeitungseinheit (62) zur Steuerung des wenigstens einen Signalisierungsmittels in Abhängigkeit von den erfassten optischen Signalen,
- wobei die wenigstens eine Verarbeitungseinheit (62) Mittel aufweist, um wenigstens ein Objekt, beispielsweise wenigstens ein Kraftfahrzeug und/oder wenigstens einen Fußgänger, aus zumindest den optischen Signalen zu erkennen,
**dadurch gekennzeichnet, dass** die Verarbeitungseinheit (62) Mittel aufweist, um den Fahr- Y bahnverlauf aus zumindest den optischen Signalen zu erkennen, indem aus den optischen Signalen Objekte, welche die Fahrbahn oder die Fahrspur festlegen, ermittelt werden und indem aus der Kenntnis der Lage dieser ermittelten Objekte der Fahrbahnverlauf berechnet wird, und dass die Verarbeitungseinheit (62) ferner Mittel aufweist, um das wenigstens eine Signalisierungsmittel (26) zur Erzeugung der Fahrerinformationen in Abhängigkeit des erkannten Fahrbahnverlaufs und in Abhängigkeit der Lage des wenigstens einen erkannten Objekts zum Fahrbahnverlauf zu steuern,
wobei die Verarbeitungseinheit (62) wobei Mittel aufweist, um das Signalisierungsmittel in Abhängigkeit von der Gefährlichkeit der Fahrsituation, zu steuern, **dadurch gekennzeichnet, dass** Mittel zur Erkennung der Gefährlichkeit, wenn ein Fußgänger (30) hinter einem entgegenkommenden Kraftfahrzeug (28) die Fahrbahn (32) kreuzt und die Gefahr eines Zusammenstoßes des eigenen Kraftfahrzeuges (10) mit dem Fußgänger(30) besteht, vorhanden sind.

2. Vorrichtung nach einem der vorhergehenden Ansprüche, **dadurch gekennzeichnet, dass** die Verarbeitungseinheit Mittel aufweist, um die Erkennung des Fahrbahnverlaufes und/oder die Erkennung von Objekten in Abhängigkeit von Signalen wenigstens eines weiteren Sensors, beispielsweise wenigstens einem Radarsensor und/oder wenigstens einem Ultraschallsensor und/oder wenigstens einem LIDAR-Abstandssensor, durchzuführen.

3. Vorrichtung nach einem der vorhergehenden Ansprüche, **dadurch gekennzeichnet, dass** die Fahrerinformationen zur Repräsentation wenigstens eines Objektes, insbesondere wenigstens eines Kraftfahrzeuges und/oder wenigstens eines Fußgängers, und/oder des Fahrbahnverlaufes geeignet sind.

4. Vorrichtung nach einem der vorhergehenden Ansprüche, **dadurch gekennzeichnet, dass** die Fahrerinformationen wenigstens ein Lichtimpuls und/oder wenigstens ein Warnsymbol und/oder wenigstens eine Bildmarkierung und/oder wenigstens ein Ausschnitt eines Bildes und/oder wenigstens ein akustisches Signal und/oder wenigstens ein haptisches Signal sind.

5. Vorrichtung nach einem der vorhergehenden Ansprüche, **dadurch gekennzeichnet, dass** wenigstens eine Infrarotstrahlungsquelle wenigstens einen Teil der von dem infrarotempfindlichen Bildsensorsystem erfassten Umgebung des Kraftfahrzeuges ausleuchtet.

6. Vorrichtung nach einem der vorhergehenden Ansprüche, **dadurch gekennzeichnet, dass** das wenigstens eine Signalisierungsmittel wenigstens ein optisches Signalisierungsmittel, insbesondere wenigstens ein Head-up-Display und/oder wenigstens ein Bildschirm, und/oder wenigstens ein akustisches Signalisierungsmittel und/oder wenigstens ein haptisches Signalisierungsmittel ist.

7. Verfahren zur Verbesserung der Sicht in einem Kraftfahrzeug (10)
- wobei wenigstens ein infrarotempfindliches Bildsensorsystem (12) optische Signale von der Umgebung des Kraftfahrzeuges erfasst,
- wobei wenigstens eine Verarbeitungseinheit (62) wenigtens ein Signalisierungsmittel zur Erzeugung von Fahrerinformationen in Abhängigkeit von den erfassten optischen Signalen steuert,
- wobei wenigstens eine Objekt, beispielsweise wenigstens ein Kraftfahrzeug und/oder wenigstens ein Fußgänger, aus zumindest den optischen Signalen erkannt wird,
wobei die Verarbeitungseinheit (62) den Fahrbahnverlauf aus zumindest den optischen Signalen erkennt, indem aus den optischen Signalen Objekte, welche die Fahrbahn oder die Fahrspur festlegen, ermittelt werden und indem aus der Kenntnis der Lage dieser ermittelten Objekte der Fahrbahnverlauf berechnet wird und dass die Verarbeitungseinheit das wenigstens eine Signalisierungsmittel zur Erzeugung der Fahrerinformationen in Abhängigkeit des erkannten Fahrbahnverlaufs und in Abhängigkeit der Lage des wenigstens einen erkannten Objekts zum Fahrbahnverlauf steuert, wobei die Fahrerinformation in Abhängigkeit von der Gefährlichkeit der Fahrsituation erzeugt werden, **dadurch gekennzeichnet, dass** als Gefährlichkeit erkannt wird, wenn ein Fußgänger (30) hinter einem entgegen kommenden Kraftfahrzeug (28) die Fahrbahn (32) kreuzt und die Gefahr eines Zusammenstoßes des eigenen Kraftfahrzeuges (10) mit dem Fußgänger (30) besteht.

8. Verfahren nach Anspruch 7, **dadurch gekennzeichnet, dass**
- die Fahrerinformationen in Abhängigkeit von den Sichtverhältnissen erzeugt werden, und/oder
- die Fahrerinformationen in Abhängigkeit von Signalen wenigstens eines weiteren Sensors, beispielsweise wenigstens eines Radarsensors und/oder wenigstens eines Ultraschallsensors und/oder wenigstens eines LIDAR-Abstandssensors, erzeugt werden, und/oder
- die Fahrerinformationen zur Repräsentation wenigstens eines Objektes, insbesondere wenigstens eines Kraftfahrzeuges und/oder wenigstens eines Fußgängers; und/oder des Fahrbahnverlaufes geeignet sind, und/oder
- die Fahrerinformationen wenigstens ein Lichtimpuls und/oder wenigstens ein Warnsymbol und/oder wenigstens eine Bildmarkierung und/oder wenigstens ein Ausschnitt eines Bildes und/oder wenigstens ein akustisches Signal und/oder wenigstens ein haptisches Signal sind.

9. Computerprogramm mit Programmcode-Mitteln, um alle Schritte von jedem beliebigen der Ansprüche 8 und 7 durchzuführen, wenn das Programm auf einem Computer ausgeführt wird.

## Claims

1. Device for improving visibility in a motor vehicle (10)
- having at least one infrared-sensitive image sensor system (12) for sensing optical signals from the surroundings of the motor vehicle,
- at least one signalling means (26) for generating driver information,
- and at least one processing unit (62) for controlling the at least one signalling means as a function of the sensed optical signals,
- wherein the at least one processing unit (62) has means for recognizing at least one object, for example at least one motor vehicle and/or at least one pedestrian, from at least the optical signals,
**characterized in that** the processing unit (62) has means for recognizing the profile of the carriageway from at least the optical signals, **in that** objects which define the carriageway or the lane are determined from the optical signals and **in that** the profile of the carriageway is calculated from the knowledge of the position of these determined objects, and **in that** the processing unit (62) also has means for controlling the at least one signalling means (26) for generating the driver information as a function of the recognized profile of the carriageway and as a function of the position of the at least one recognized object with respect to the profile of the carriageway, wherein the processing unit (62) has means for controlling the signalling means as a function of the danger presented by the driving situation, **characterized in that** means for detecting the danger when a pedestrian (30) crosses the carriageway (32) behind an oncoming motor vehicle (28) and there is the risk of a collision between the driver's own motor vehicle (10) and the pedestrian (30) are provided.

2. Device according to the preceding claim, **characterized in that** the processing unit has means for recognizing the profile of the carriageway and/or recognizing objects as a function of signals of at least one further sensor, for example at least one radar sensor and/or at least one ultrasonic sensor and/or at least one LIDAR distance sensor.

3. Device according to one of the preceding claims, **characterized in that** the driver information is suitable for representing at least one object, in particular at least one motor vehicle and/or at least one pedestrian, and/or the profile of the carriageway.

4. Device according to one of the preceding claims, **characterized in that** the driver information comprises at least one light pulse and/or at least one warning sign and/or at least one image marker and/or at least one detail of an image and/or at least one acoustic signal and/or at least one haptic signal.

5. Device according to one of the preceding claims, **characterized in that** at least one infrared radiation source illuminates at least part of the surroundings of the motor vehicle which are sensed by the infrared-sensitive image sensor system.

6. Device according to one of the preceding claims, **characterized in that** the at least one signalling means is at least an optical signalling means, in particular at least a head-up display and/or at least a screen, and/or at least an acoustic signalling means and/or at least a haptic signalling means.

7. Method for improving visibility in a motor vehicle (10)
- wherein at least one infrared-sensitive image sensor system (12) senses optical signals from the surroundings of the motor vehicle,
- wherein at least one processing unit (62) controls at least one signalling means for generating driver information as a function of the sensed optical signals,
- wherein at least one object, for example at least one motor vehicle and/or at least one pedestrian, is recognized from at least the optical signals,
wherein the processing unit (62) recognizes the profile of the carriageway from at least the optical signals in that objects which define the carriageway or the lane are determined from the optical signals, and in that the profile of the carriageway is calculated from the knowledge of the position of these determined objects, and in that the processing unit controls the at least one signalling means so that it generates the driver information as a function of the recognized profile of the carriageway and as a function of the position of the at least one recognized object with respect to the profile of the carriageway, wherein the driver information is generated as a function of the danger presented by the driving situation, **characterized in that** the danger is detected if a pedestrian (30) crosses the carriageway (32) behind an oncoming motor vehicle (28) and there is the risk of a collision between the driver's own vehicle (10) and the pedestrian (30).

8. Method according to Claim 7, **characterized in that**
- the driver information is generated as a function of the visibility conditions, and/or
- the driver information is generated as a function of signals of at least one further sensor, for example of at least one radar sensor and/or at least one ultrasonic sensor and/or at least one LIDAR distance sensor, and/or
- the driver information is suitable for representing at least one object, in particular at least one motor vehicle and/or at least one pedestrian, and/or the profile of the carriageway, and/or
- the driver information comprises at least one light pulse and/or at least one warning sign and/or at least one image marker and/or at least one detail of an image and/or at least one acoustic signal and/or at least one haptic signal.

9. Computer program having program code means for carrying out all the steps of any of Claims 7 and 8 when the program is run on a computer.

## Revendications

1. Dispositif pour améliorer la visibilité dans un véhicule automobile (10), comprenant
- au moins un système capteur d'image (12) sensible aux infrarouges pour acquérir des signaux optiques de l'environnement du véhicule automobile,
- au moins un moyen de signalisation (26) pour générer des informations pour le conducteur
- et au moins une unité de traitement (62) pour commander l'au moins un moyen de signalisation en fonction des signaux optiques acquis,
- l'au moins une unité de traitement (62) comprenant des moyens pour détecter au moins un objet, par exemple au moins un véhicule automobile et/ou au moins un piéton, au moins à partir des signaux optiques,
**caractérisé en ce que** l'unité de traitement (62) présente des moyens pour détecter le tracé de la chaussée au moins à partir des signaux optiques en déterminant à partir des signaux optiques les objets qui définissent la chaussée ou la voie de circulation et en calculant le tracé de la chaussée à partir de la connaissance de la position de ces objets déterminés, et **en ce que** l'unité de traitement (62) présente en outre des moyens pour commander l'au moins un moyen de signalisation (26) en vue de générer les informations pour le conducteur en fonction du tracé détecté de la chaussée et en fonction de la position de l'au moins un objet détecté par rapport au tracé de la chaussée, l'unité de traitement (62) présentant des moyens pour commander le moyen de signalisation en fonction de la dangerosité de la situation de conduite, **caractérisé en ce qu'**il existe des moyens pour détecter la dangerosité lorsqu'un piéton (30) traverse la chaussée (32) derrière un véhicule automobile (28) qui arrive en sens inverse et **en ce qu'**il existe un risque de collision entre le véhicule automobile propre (10) et le piéton (30).

2. Dispositif selon l'une des revendications précédentes, **caractérisé en ce que** l'unité de traitement présente des moyens pour effectuer la détection du tracé de la chaussée et/ou la détection des objets en fonction des signaux d'au moins un capteur supplémentaire, par exemple d'au moins un capteur radar et/ou d'au moins un capteur à ultrasons et/ou d'au moins un capteur de distance LIDAR.

3. Dispositif selon l'une des revendications précédentes, **caractérisé en ce que** les informations pour le conducteur sont conçues pour représenter au moins un objet, notamment au moins un véhicule automobile et/ou au moins un piéton et/ou le tracé de la chaussée.

4. Dispositif selon l'une des revendications précédentes, **caractérisé en ce que** les informations pour le conducteur sont au moins une impulsion lumineuse et/ou au moins un symbole d'avertissement et/ou au moins un marquage d'image et/ou au moins une section d'une image et/ou au moins un signal sonore et/ou au moins un signal sensoriel.

5. Dispositif selon l'une des revendications précédentes, **caractérisé en ce qu'**au moins une source de rayonnement infrarouge éclaire au moins une partie de l'environnement du véhicule automobile balayé par le système capteur d'image sensible aux infrarouges.

6. Dispositif selon l'une des revendications précédentes, **caractérisé en ce que** l'au moins un moyen de signalisation est au moins un moyen de signalisation visuel, notamment au moins un afficheur tête haute et/ou au moins un écran et/ou au moins un moyen de signalisation sonore et/ou au moins un moyen de signalisation sensorielle.

7. Procédé pour améliorer la visibilité dans un véhicule automobile (10),
- au moins un système capteur d'image (12) sensible aux infrarouges acquérant des signaux optiques de l'environnement du véhicule automobile,
- au moins une unité de traitement (62) commandant au moins un moyen de signalisation pour générer des informations pour le conducteur en fonction des signaux optiques acquis,
- au moins un objet, par exemple au moins un véhicule automobile et/ou au moins un piéton, étant détecté au moins à partir des signaux optiques,
l'unité de traitement (62) détectant le tracé de la chaussée au moins à partir des signaux optiques en déterminant à partir des signaux optiques les objets qui définissent la chaussée ou la voie de circulation et en calculant le tracé de la chaussée à partir de la connaissance de la position de ces objets déterminés, et l'unité de traitement commandant l'au moins un moyen de signalisation en vue de générer les informations pour le conducteur en fonction du tracé détecté de la chaussée et en fonction de la position de l'au moins un objet détecté par rapport au tracé de la chaussée, les informations pour le conducteur étant générées en fonction de la dangerosité de la situation de conduite, **caractérisé en ce que** la dangerosité est reconnue lorsqu'un piéton (30) traverse la chaussée (32) derrière un véhicule automobile (28) qui arrive en sens inverse et qu'il existe un risque de collision entre le véhicule automobile propre (10) et le piéton (30).

8. Procédé selon la revendication 7, **caractérisé en ce que**
- les informations pour le conducteur sont générées en fonction des conditions de visibilité et/ou
- les informations pour le conducteur sont générées en fonction des signaux d'au moins un capteur supplémentaire, par exemple d'au moins un capteur radar et/ou d'au moins un capteur à ultrasons et/ou d'au moins un capteur de distance LIDAR, et/ou
- les informations pour le conducteur sont conçues pour représenter au moins un objet, notamment au moins un véhicule automobile et/ou au moins un piéton et/ou le tracé de la chaussée, et/ou
- les informations pour le conducteur sont au moins une impulsion lumineuse et/ou au moins un symbole d'avertissement et/ou au moins un marquage d'image et/ou au moins une section d'une image et/ou au moins un signal sonore et/ou au moins un signal sensoriel.

9. Programme informatique comprenant des moyens de code de programme pour réaliser toutes les étapes de l'une quelconque des revendications 8 et 7 lorsque le programme est exécuté sur un ordinateur.
